# EUROPEAN PATENT APPLICATION

(11) **EP 4 838 838 A1**
(43) Date of publication of application: **11.11.2026**
(21) Application number: 26175472.5
(22) Date of filing: 29.04.2026
(51) Int. Cl.: H04L 9/40, H04L 9/08, H04W 4/50

(54) **METHOD AND APPARATUS FOR COHERENT OPTICAL MODULE ENCRYPTION AND DECRYPTION**

(30) Priority: 02.05.2025 US 202563799265 P
(71) Applicant: Infinera Corporation, Wilmington, New Castle County, DE 19803 (US)
(72) Inventor: RAO, Rajan, Fremont, CA (US); PLANTARE, Mats, Lidingo (SE); VALIVETI, Radhakrishna, Union City, CA (US); SYED, Sharfuddin, San Ramon, CA (US)
(74) Representative: Novagraaf Technologies

(57) **Abstract**

Described are various embodiments of a method and apparatus for coherent optical module encryption and decryption. A coherent pluggable optical module is configured to receive, from a host device, one or more security parameters and keying material via a management interface. The processors store the parameters and keying material in the secure storage region and, in response to an activation indication, enable encryption for client signals on a transmit path and/or decryption on a receive path. The security parameters may include an encryption scope indicating per-client or bulk encryption. Supported encryption types include MACsec, FlexOsec, and ZRsec. Configuration may be performed via CMIS command data blocks, register-based access, or high-speed interfaces such as SGMII. The module supports Gigabit Ethernet and optical transport clients including OTUk and OTUCn signals.

## Description

### CROSS-REFERENCE TO RELATED APPLICATIONS

This application claims the benefit of U.S. Provisional Application No. 63/799,265 filed May 2, 2025, which is incorporated herein by reference in its entirety.

### FIELD OF THE DISCLOSURE

The present invention relates to the field of coherent optical modules, and more specifically to the field of encryption and decryption in relation to such modules.

### BACKGROUND

Pluggable module configurations use, rely and depend on the Common Management interface Specification (CMIS) register interface defined by the Optical Internetworking Forum (OIF). By way of further example, I2C or I3C interfaces may be used. Certain proprietary solutions exist for IP layer connectivity over SGMII in for example QSFP-DD and OSFP pluggable modules, and additional support is also building for possible non-proprietary solutions for IP connectivity over a SGMII interface. IP layer connectivity, however, is not defined for any of 'Host-to-Module' interactions, or 'Module-to-Module' interactions, or 'Module-to- external server' interactions.

Industry standards pertinent to this disclosure and which are hereby incorporated herein by reference include, for example:
A. ITU-T G.709.[l-6] (which for example defines optical transport network (OTN) Line side frame format, rates, FCC, FlexOsec encryption, etc.);
B. IEEE802.1AE-2018 (MACsec, which for example defines security for MAC layer (L2) over point-to-point links, or point-to-multi-point links);
C. IEEE802. lx (which for example defines EAP);
D. OIF CMIS (which for example defines management interface for host-to-pluggables module interactions);
E. IETF RFC7296 (wherein for example the IKEv2 protocol supports secure associations between two peers for key exchange and derivation using DH or ECDH options);
F. RFC 9690 (which for example describes use of the RSA-KEM Algorithm in the Cryptographic Message Syntax (CMS));
G. NIST SP 800-227 (which for example describes Recommendations for Key-Encapsulation Mechanisms); and
H. IEEE 802. IAR (which for example defines iDev-Id for device authentication).
I. OIF-800ZR-01.0 (which for example defines ZR modes as per the Implementation Agreement 800ZR, October 2024); and
J. OpenROADM MSA Specification (which for example defines OpenROADM modes).

This background information is provided to reveal information believed by the applicant to be of possible relevance. No admission is necessarily intended, nor should it be construed, that any of the preceding information constitutes prior art or forms part of the general common knowledge in the relevant art.

### SUMMARY

The following presents a simplified summary of the general inventive concept(s) described herein to provide a basic understanding of some aspects of the disclosure. This summary is not an extensive overview of the disclosure. It is not intended to restrict key or critical elements of embodiments of the disclosure or to delineate their scope beyond that which is explicitly or implicitly described by the following description and claims.

A need exists for an open interoperable and secure approach for security parameter configuration by the host of a coherent pluggable module.

In accordance with a first aspect, there is a method for configuring security in a coherent pluggable optical module, the method comprising: exchanging command data with a host device via a management interface; receiving, via the management interface, one or more security parameters comprising at least one of: an encryption type, an algorithm identifier, a key lifetime, and a timeout behavior; receiving, via the management interface, keying material; storing the security parameters and the keying material in a secure memory region within the module; processing an activation indication from the host device; and in response to the activation indication, enabling encryption for client signals on a transmit path and/or enabling decryption for client signals on a receive path.

In accordance with another aspect, there is provided a coherent pluggable optical module configured to be removably coupled to a host device, the module comprising: a management interface; one or more processors; a memory comprising a secure storage region configured to store security parameters and key material; a cryptographic engine configured to perform encryption and decryption of client data; and wherein the memory further comprises instructions that, when executed by the one or more processors, cause the processors to: receive, from the host device, via the management interface, one or more security parameters and keying material; store the security parameters and the keying material in the secure storage region; and process an activation indication from the host device; and in response to the activation indication, enabling encryption for client signals on a transmit path and/or enabling decryption for client signals on a receive path.

In some embodiments of the first or second aspect, the security parameters further comprise an encryption scope parameter that indicates per client encryption or bulk encryption.

In some embodiments of the first or second aspect, per-client encryption comprises applying, to each of a subset of one or more client signals of the coherent pluggable optical module, encryption using a designated encryption type, and a designated encryption key from said keying material.

In some embodiments of the first or second aspect, the designated client signals not included in said subset are operated in non-encryption plain text mode.

In some embodiments of the first or second aspect, bulk encryption comprises applying encryption to all client signals of the coherent pluggable module using a common encryption key from the keying material, and a designated encryption type selected from FlexOSec or ZRsec.

In some embodiments of the first or second aspect, the subset of client signals comprises Gigabit Ethernet (nGE) client signals, and the designated encryption type is selected from MACsec, FlexOsec, or ZRsec.

In some embodiments of the first or second aspect, the subset of client signals comprises optical transport network (OTN) client signals, and the designated encryption type is FlexOsec.

In some embodiments of the first or second aspect, the security parameters and the keying material are transmitted in plain text over the management interface.

In some embodiments of the first or second aspect, receiving the security parameters and the keying material is performed according to a key encapsulation mechanism (KEM) scheme.

In some embodiments of the first or second aspect, the keying material comprises at least one of Advanced Encryption Standard (AES) key.

Other aspects, features and/or advantages will become more apparent upon reading of the following non-restrictive description of specific embodiments thereof, given by way of example only with reference to the accompanying drawings.

### BRIEF DESCRIPTION OF THE DRAWINGS

The accompanying drawings below, which are incorporated in and constitute a part of this specification, illustrate one or more example embodiments of the present invention described herein and, together with the description, describe these implementations. The drawings are not intended to be drawn to scale, and certain features and certain views of the figures for example may be shown exaggerated, and/or otherwise not-to-scale, and/or in schematic form, in the interest of clarity and conciseness. Not every component may be labeled in every drawing. Like reference numerals and/or other labels in the figures may represent and refer to the same or similar element or function, even though such elements or functions may be non-identical from one figure to another figure. In the drawings:
FIG. 1 is a first block diagram schematically depicting an example optical network employing coherent optical modules, in accordance with one embodiment.
FIG. 2 is a block diagram schematically depicting an example optical network wherein key exchange is performed between two hosts at endpoints of the optical link, in accordance with one embodiment, in accordance with one embodiment.
FIG. 3 is a block diagram schematically depicting an example host and an example cooperating pluggable in the so-called "FlexO" (i.e., OpenROADM 5/6) modes, in accordance with one embodiment.
FIG. 4 is a block diagram schematically depicting an example host and an example cooperating pluggable in the so-called "ZR" modes, in accordance with one embodiment.
FIG. 5 is a block diagram schematically depicting an example host and an example cooperating pluggable, representing an AES test - FlexOsec case, in accordance with one embodiment.
FIG. 6 is a block diagram schematically depicting an example network element (with pluggable), and a related example security parameter configuration and activation flow diagram, in accordance with one embodiment.
FIG. 7 is a table depicting example Command Data Block (CDB) extensions/ commands for security parameter configuration and activation in an example pluggable, over an example CMIS interface, in accordance with one embodiment.
FIG. 8A is a first portion of a table depicting example CMIS extensions/command data fields for security parameter configuration in an example pluggable in accordance with the present invention, with reference to the CMIS specification, in accordance with one embodiment.
FIG. 8B is a second portion of the same table introduced by FIG. 8A, depicting example security configuration parameters, with reference to the CMIS specification, in accordance with one embodiment.
FIG. 9A is a first portion of a table depicting example CMIS extensions for encryption key configuration in an example pluggable in accordance with the present invention, with reference to the CMIS specification, in accordance with one embodiment.
FIG. 9B is a second portion of the same table introduced by FIG. 9A depicting example CMIS extensions for encryption key configuration in an example pluggable in accordance with the present invention, with reference to the CMIS specification, in accordance with one embodiment.
FIG. 10A is a first portion of a table depicting example CMIS extensions/command data fields for decryption key configuration in an example pluggable in accordance with the present invention, with reference to the CMIS specification, in accordance with one embodiment.
FIG. 10B is a second portion of the same table introduced by FIG. 10A, depicting example decryption key parameters that an example host is permitted to configure via a "Configure Decryption Key" command, in accordance with one embodiment.
FIG. 11 is a table depicting example command data fields for activation and/or hitless switchover of an encryption key in an example pluggable in accordance with the present invention, with reference to the CMIS specification, in accordance with one embodiment.
FIG. 12 is a table depicting example command data fields for activation and/or hitless switchover of a decryption key in an example pluggable in accordance with the present invention, with reference to the CMIS specification, in accordance with one embodiment.
FIG. 13 is a table depicting an example one-time CDB action command that may be employed for verification of encryption and decryption functionality in the module, with reference to the CMIS specification, in accordance with one embodiment.
FIG. 14 is another block diagram schematically depicting an example host and an example cooperating pluggable in the so-called "FlexO" (i.e., OpenROADM 5/6) modes, in accordance with another embodiment.
FIG. 15 is another block diagram schematically depicting an example host and an example cooperating pluggable in the so-called "ZR" modes, in accordance with another embodiment.
FIG. 16 is block diagram schematically depicting an example host and an example cooperating pluggable configured to perform an AES test in the MACsec case, in accordance with one embodiment.
FIG. 17 another block diagram schematically depicting example host and an example cooperating pluggable, representing another AES test - FlexOsec case, in accordance with another embodiment.
FIG. 18 is a block diagram illustrating a coherent pluggable optical module, in accordance with one embodiment.

### DETAILED DESCRIPTION

Various implementations and aspects of the specification will be described with reference to details discussed below. The following description and drawings are illustrative of the specification and are not to be construed as limiting the specification. Numerous specific details are described to provide a thorough understanding of various implementations of the present specification. However, in certain instances, well-known or conventional details are not described in order to provide a concise discussion of implementations of the present specification.

OIF versions CMIS5.3 or earlier don't have provisions for secure communication between the host and the module required for security parameter(s) configuration/ activation by the host. The latest coherent pluggable modules for example include encryption capabilities, such as for example MACsec and FlexOsec. However, lack of a standardized protocol for key exchange over FCC prevents embedding key exchanges protocols within the module. In short, while encryption/decryption mechanisms do exist, generally speaking, in many communication products, encryption/decryption mechanisms, including methods and apparatus for the activation/configuration of such mechanisms, aren't yet fully realized for example with respect to coherent pluggable modules.

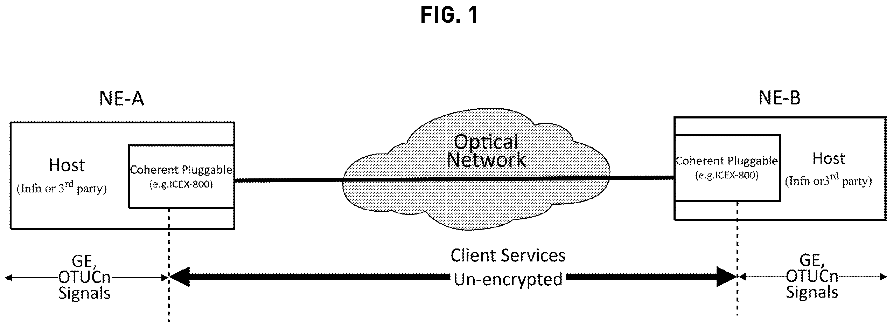

The inventors of the present invention have recognized an opportunity for an open, interoperable and secure approach for security parameter configuration/ activation by the host and describe herein new apparatus and methods to address such opportunity, with reference to the below FIGS. 1-18.

In summary, one or more example embodiments of the present invention disclosed herein enable one or more of the following:
- Security parameter(s) configuration by host via CMIS using plain text approach for MACsec or FlexOsec encryption/decryption;
- Security parameter(s) configuration by host via CMIS using secure approach for MACsec or FlexOsec encryption/decryption;
- Security parameter(s) configuration by host via CMIS using key encapsulation approach for MACsec or FlexOsec encryption/decryption.
- MACsec or FlexOSec encryption/decryption configuration by host via CMIS per client, which for example may be per Gigabit Ethernet (nGE) client, and which for example may use a unique key per service for encryption; and/or
- Encryption options in one or both of ZR800 and OpenROADMS.0/6.0 modes;
- Use of CDB options in CMIS for each of the commands above.

In addition to using Command Data Block (CDB) commands, it is contemplated that in some embodiments the host can configure security parameters via other management interfaces as well. For example, the security settings may be applied through the standard register-based CMIS interface - e.g., by writing to defined registers in the module's memory map - without relying on CDB transactions. Likewise, in some embodiments a high-speed sideband interface (such as an SGMII-based host-module link) can be used to convey security configuration data. In other words, while the above description often refers to CDB-based configuration over an I²C/I³C management link, the invention is not limited to that approach. The host may alternatively or additionally perform the configuration using direct register access or via auxiliary high-speed interfaces, thereby providing flexibility in how security parameters are delivered to the pluggable module.

In some embodiments, the system or method of the present disclosure may further allow one or more some clients (e.g., GE clients, or for OTN clients such as OTUk and OTUCn signals) to be configured for encryption, while others are operating in non-encrypted (i.e., plain text) modes.

FIG. 1 is a first block diagram schematically depicting an example optical network employing coherent optical pluggable modules (also sometimes referred to herein as simply "pluggables"), such as for example ICE-X^{™} pluggables from Infinera/Nokia or similar, to provide high-bandwidth optical connectivity between two sites. Typical rates may include for example 400Gbps, 600 Gbps and 800 Gbps. Higher rates may also be considered, including for example 1.6 Tbps or similar. Such pluggables find application for example in network switches, routers, transponders and muxponders, to provide network connectivity between Network Elements (NEs). Infinera's/Nokia's ICE-X 800G module for example supports 800ZR-IA, OpenROADM compliant modes, and G.709-based client encapsulation and transport to peer. Pluggables may take a variety of form factors, such as for example QSFP-DD and OSFP form factors.

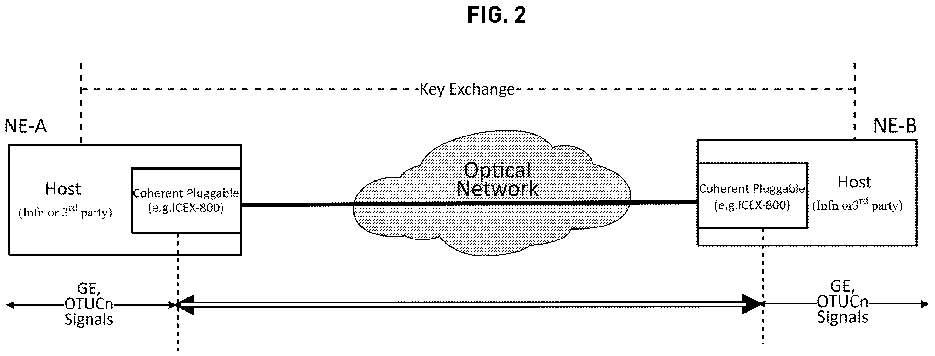

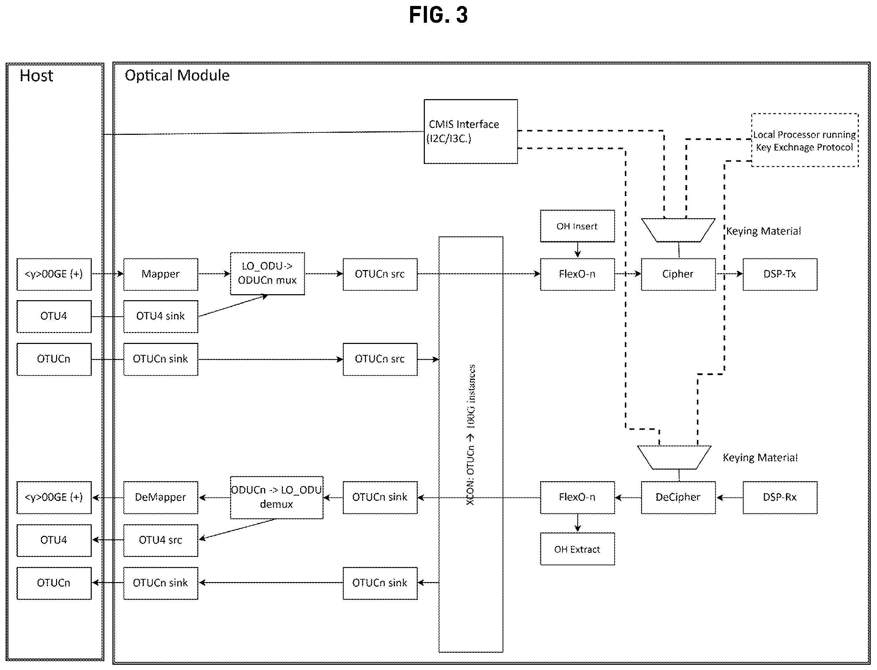

FIG. 2 is a block diagram schematically depicting an example optical network employing pluggables. The illustrated pluggables support encrypted services between the pluggables. In this example, the pluggable performs MACsec or FlexOsec encryption/decryption functions with configuration driven by the pluggable host. Here, MACsec is applicable to nGE clients only, while FlexOsec is applicable to both nGE and OTN clients. Host runs MKA, IKEv2 or other key exchange protocol(s) to determine AES keys. Hosts at respective ends each program its cooperating pluggable with AES encryption & decryption keys. This configuration happens over a CMIS interface with extensions, as shown in later figures, for example FIGs. 3-5, or 14-17.

The module performs per-service MACsec/FlexOsec or bulk FlexOsec encryption based on a host-driven configuration.

FIG. 3 is a block diagram schematically depicting an example host and an example cooperating pluggable in the so-called "FlexO" (i.e., OpenROADM 5/6) modes. Illustrated are high-level schematic cipher and decipher FlexOsec blocks. The pluggable supports key configuration in host-driven or module-driven modes.

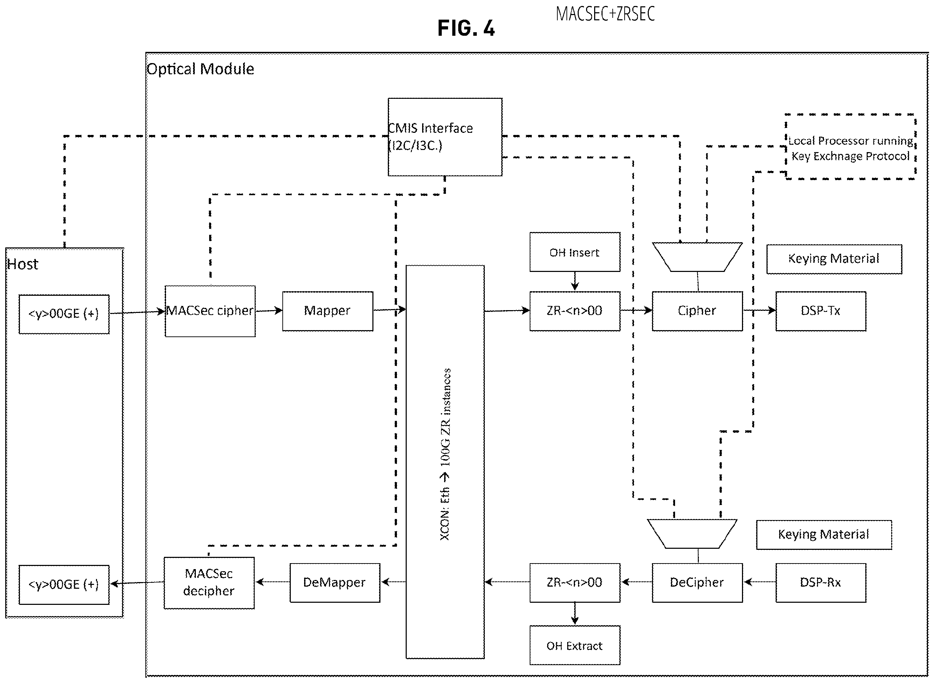

FIG. 4 is a block diagram schematically depicting an example host and an example cooperating pluggable in the so-called "ZR" modes. Illustrated are high-level schematic cipher and decipher blocks for ZR modes. Here, only Ethernet clients are supported. The pluggable supports key configuration in host-driven or module-driven modes.

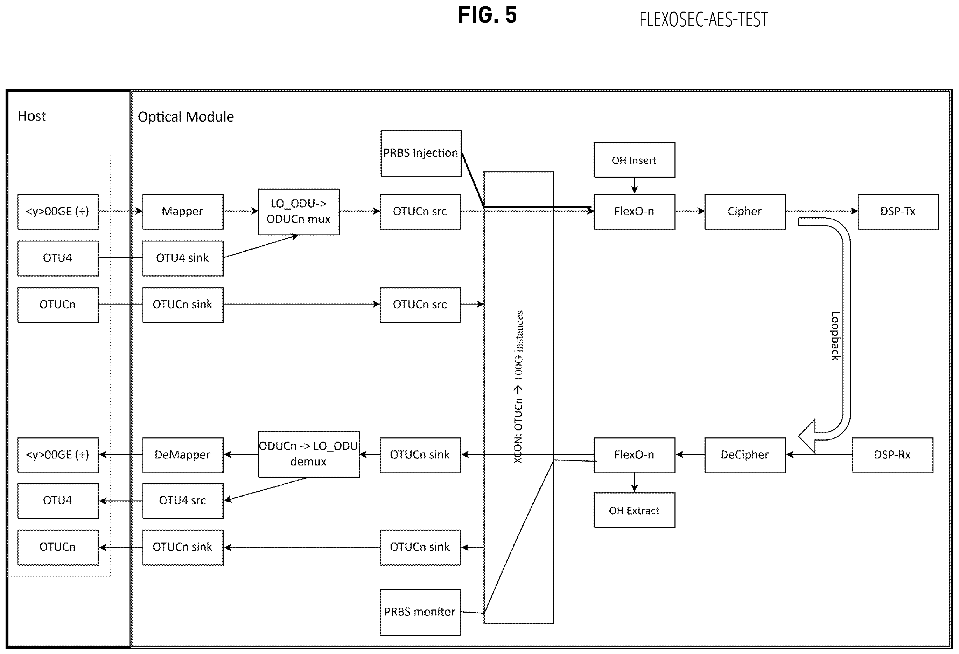

FIG. 5 is a block diagram schematically depicting an example host and an example cooperating pluggable, representing an AES test - FlexOsec case. In this example, which enables encryption, the host configures the keying material. A pseudo-random binary sequence (PRBS) is injected in place of the actual client signal (or ODU(s)) into all 100G FlexO instances, and encryption is applied after FlexO-n framing and overhead insertion, allowing the PRBS stream to be processed through both cipher and decipher blocks during the test. After decryption and subsequent demapping, the PRBS stream is monitored for pattern matches. A test run is conducted for the duration requested by the host. A pass/fail determination is based on the number of PRBS errors detected. Similar tests can be performed in ZR modes, including for example those shown in FIG. 4.

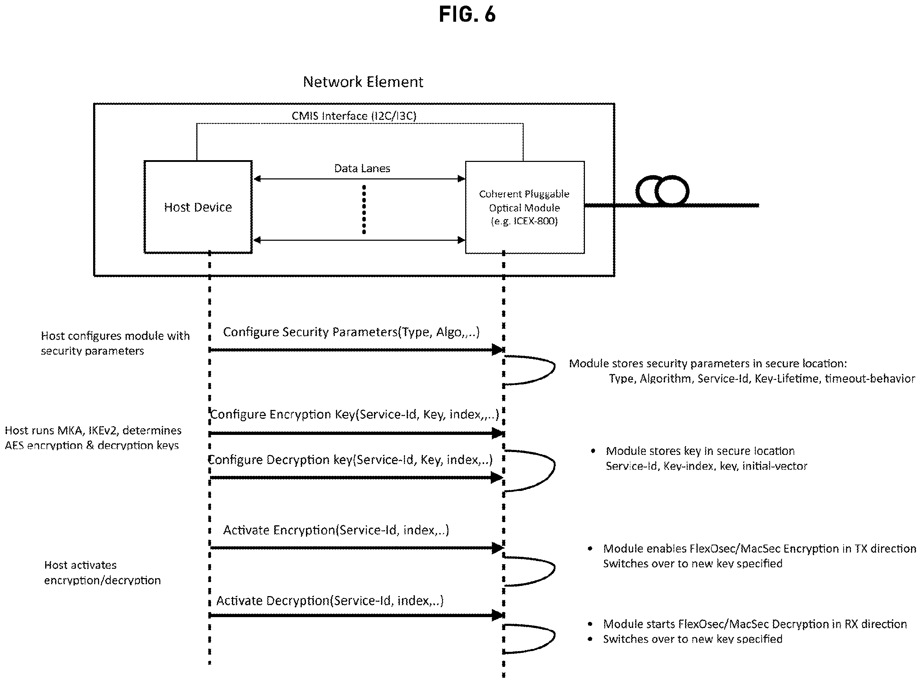

FIG. 6 is a block diagram schematically depicting an example network element (with pluggable), and a related example security parameter configuration and activation flow diagram. In this example, the host configures the module with security parameters and AES keys via CMIS, as reflected on the left side of the figure, and the module provides a success/failure response as per CMIS. The module also stores the key in a secure memory location, including as a non-limiting example inside the DSP. The host activates encryption/decryption. For example, an activate command starts client data encryption, and in the case of FlexOSec, this sets key index information in FlexOsec overhead. The remote module uses this indication to start decrypting. The module provides a success/ failure response as per CMIS.

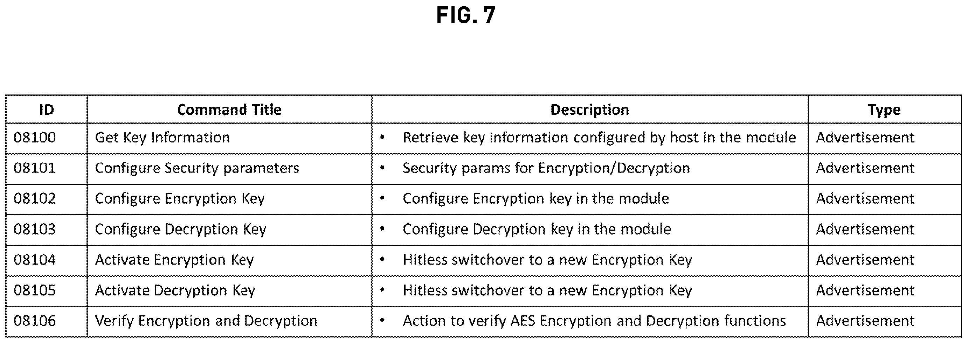

FIG. 7 is a table depicting example CDB extensions/ commands for security parameter configuration and activation in an example module, over an example CMIS interface.

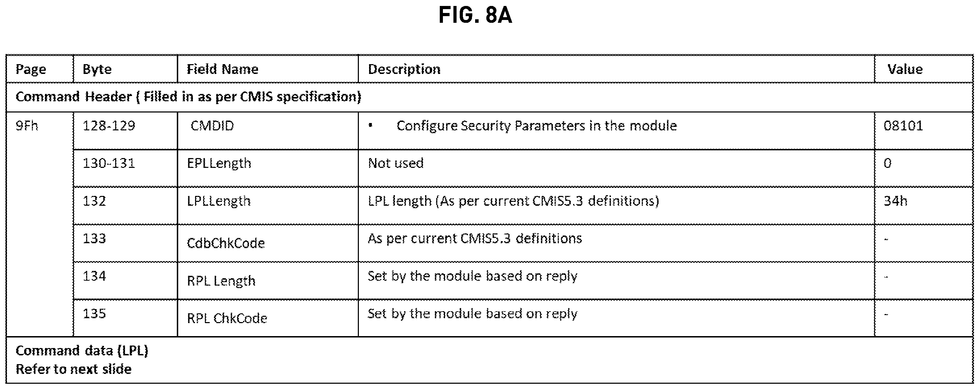

FIG. 8A is a first portion of a table depicting example CMIS extensions/command data fields for security parameter configuration in an example pluggable in accordance with the present invention, with reference to the CMIS specification. The host for example may be permitted to configure via a "Configure Security Parameters" command. Here, use of a LPL option is contemplated for sending command data to the module by the host.

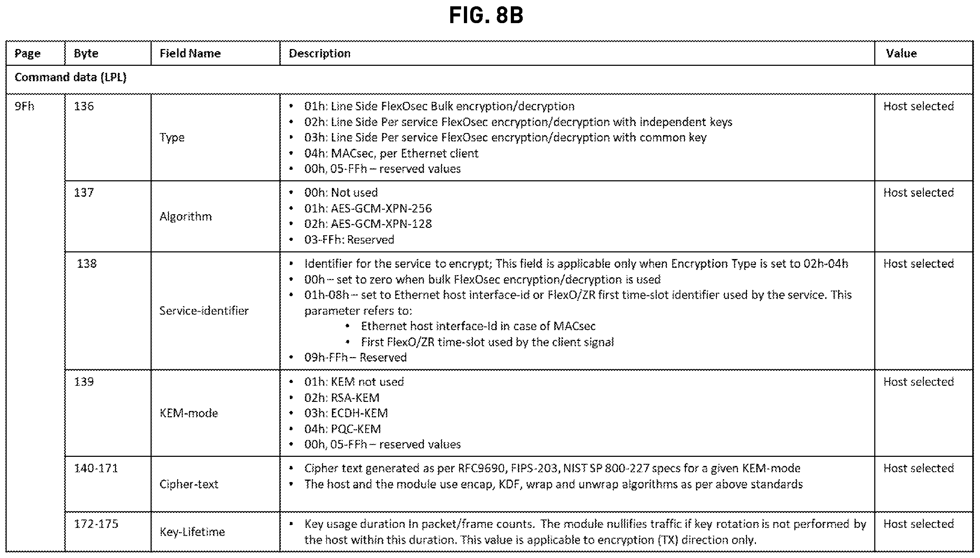

FIG. 8B is a second portion of the same table introduced by FIG. 8A, depicting example security configuration parameters that an example host is permitted to configure via a "Configure Security Parameters" command.

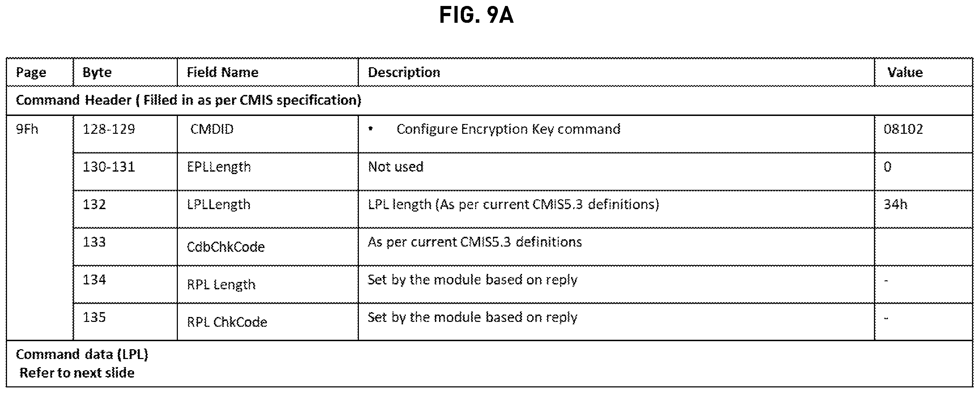

FIG. 9A is a first portion of a table depicting example CMIS extensions for encryption key configuration in an example pluggable in accordance with the present invention, with reference to the CMIS specification. The host for example, may be permitted to configure via a "Configure Encryption Key" command. Here, use of a LPL option is contemplated for sending command data to the module by the host.

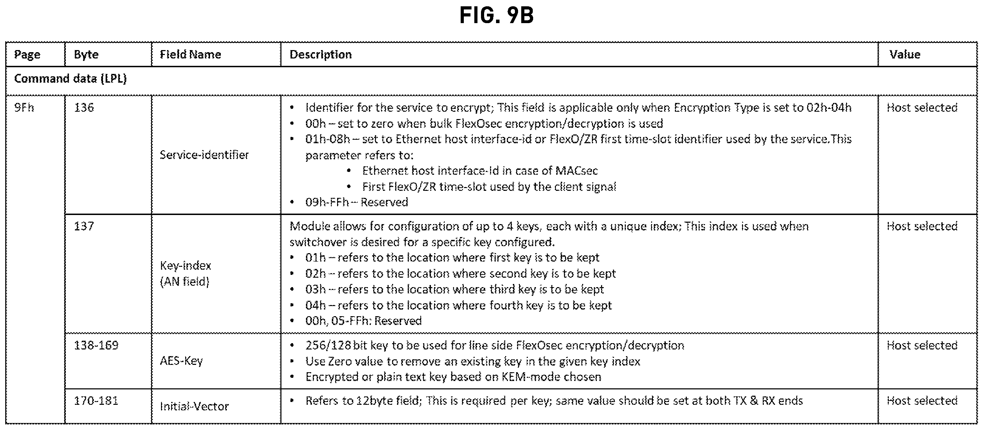

FIG. 9B is a second portion of the same table introduced by FIG. 9A, depicting example CMIS extensions for encryption key configuration in an example pluggable in accordance with the present invention, with reference to the CMIS specification.

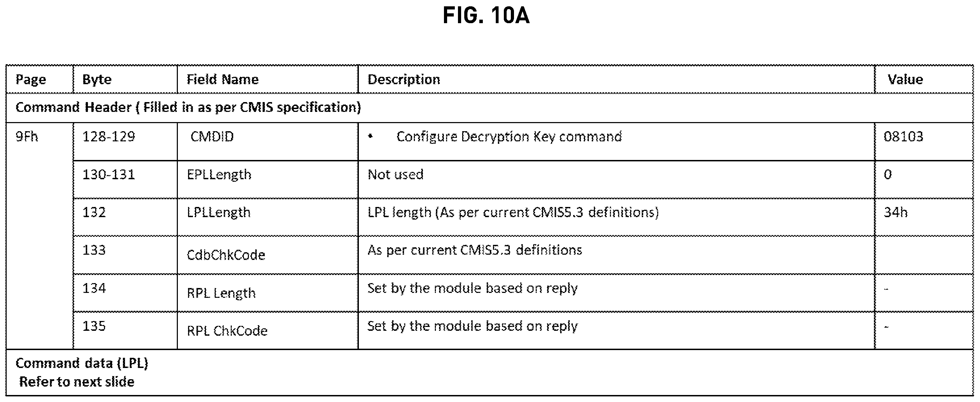

FIG. 10A is a first portion of a table depicting example CMIS extensions/command data fields for decryption key configuration in an example pluggable in accordance with the present invention, with reference to the CMIS specification. The host for example may be permitted to configure via a "Configure Decryption Key" command. Here, use of a LPL option is contemplated for sending command data to the module by the host.

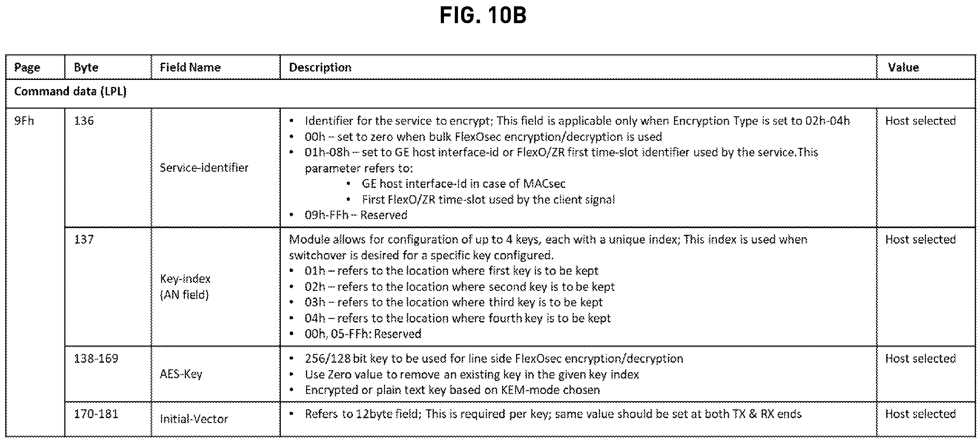

FIG. 10B is a second portion of the same table introduced by FIG. 10A, depicting example decryption key parameters that an example host is permitted to configure via a "Configure Decryption Key" command.

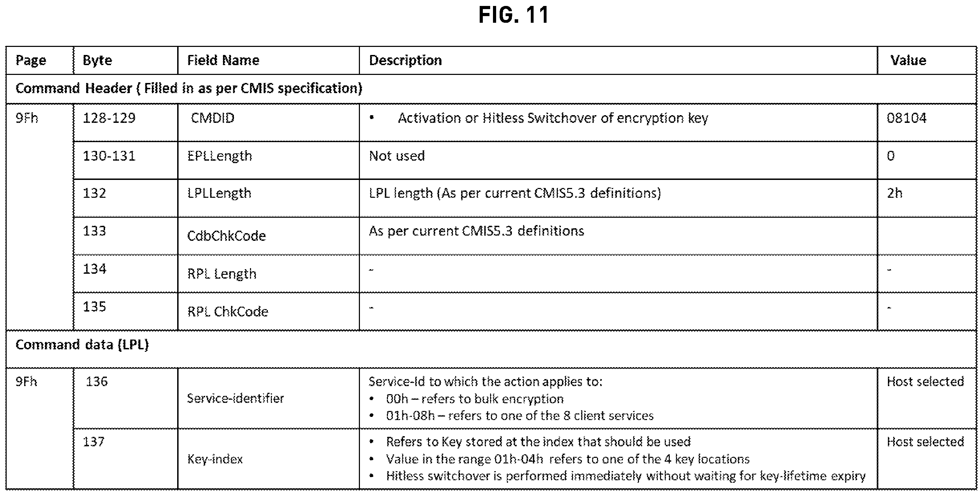

FIG. 11 is a table depicting example command data fields for activation and/or hitless switchover of an encryption key in an example pluggable in accordance with the present invention, with reference to the CMIS specification.

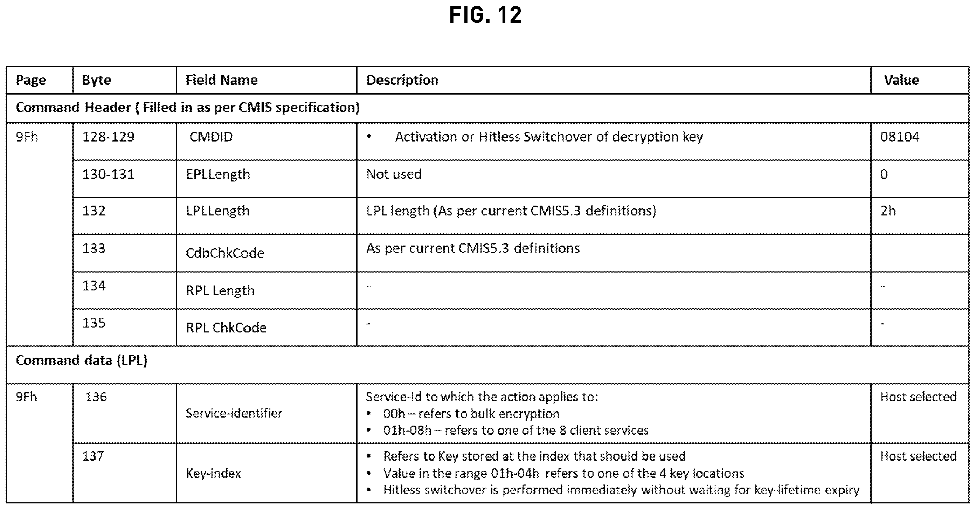

FIG. 12 is a table depicting example command data fields for activation and/or hitless switchover of a decryption key in an example pluggable in accordance with the present invention, with reference to the CMIS specification.

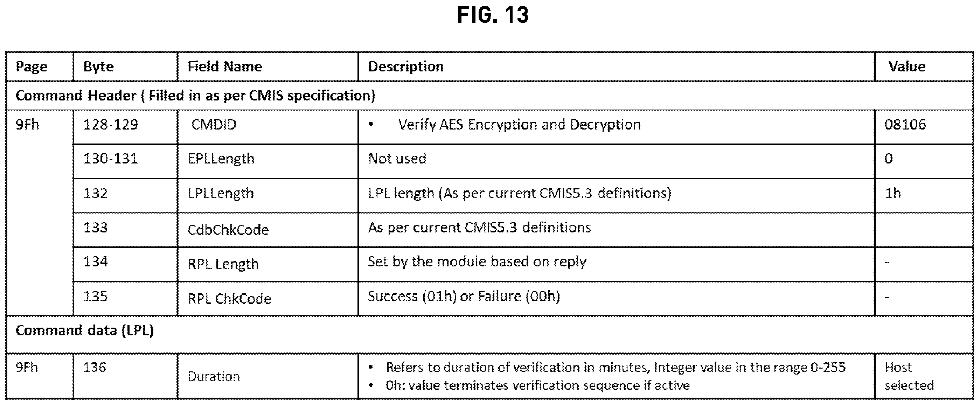

FIG. 13 is a table depicting an example one-time CDB action command that may be employed for verification of encryption and decryption functionality in the module, with reference to the CMIS specification. Once issued, this command for example results in framed PRBS generation in every FlexO time slot. A key is stored in key-index=0 for encryption and decryption. A loopback configuration serves to feed signal back to a decryption block. Verification of PRBS pattern and success/ failure result is reported at the end of the specified duration.

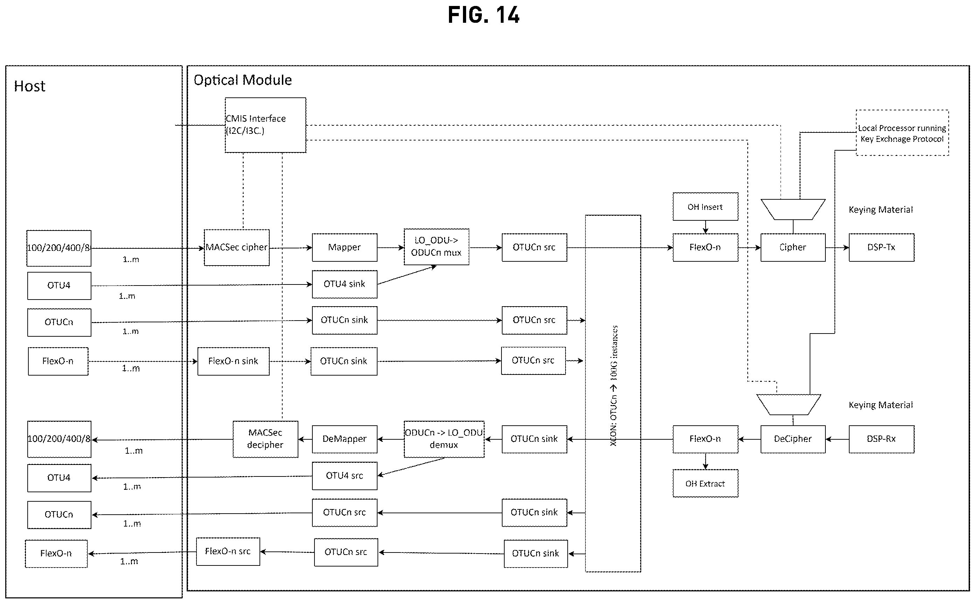

With reference to FIGs. 14-17, additional embodiments of host-module configurations will be discussed below.

FIG. 14 illustrates another example of high-level blocks for the module in the FlexO (i.e., OpenRoadm 5/6) modes, in accordance with another embodiment. While the module can be configured to support key configuration in either host driven or module driven modes, this example is only concerned with host-driven key configuration. The parameter m depends on the rates of the client signal, and the capacity of the module. In this example, MACsec can be enabled for a subset of Ethernet clients, while FlexOsec can be operated in bulk-encryption mode, or only be enabled for a subset of 100G "slices." Both MACsec and FlexOsec can be concurrently active.

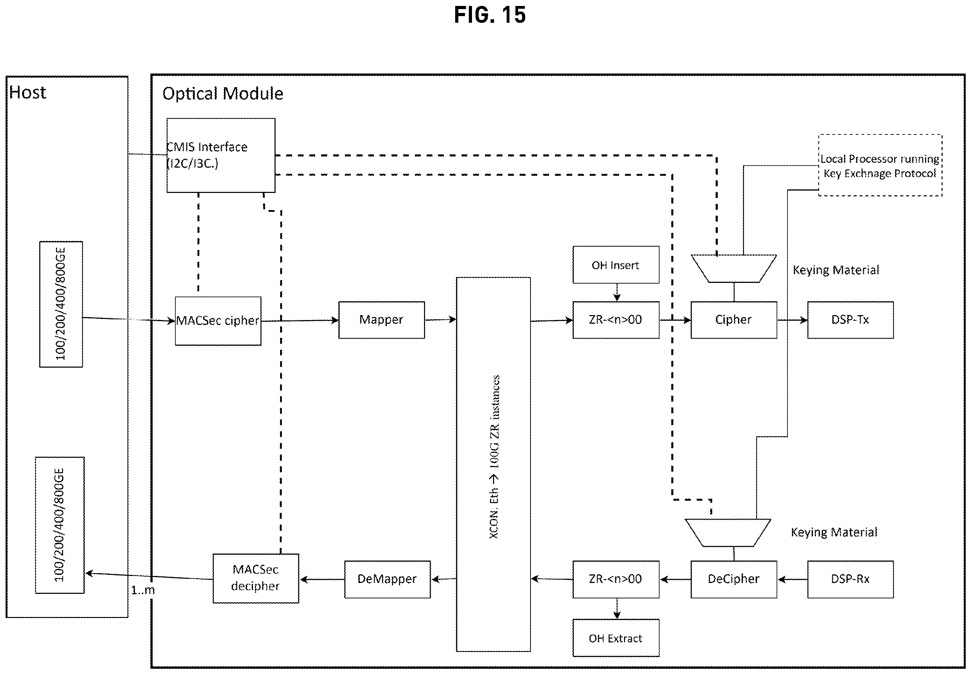

FIG. 15 is another diagram illustrating an exemplary embodiment of a high-level optical module featuring a host and an example cooperating pluggable in the ZR modes. Illustrated are high-level schematic cipher and decipher blocks for ZR modes. In this example, only Ethernet clients are supported. The pluggable supports key configuration in host-driven or module-driven modes.

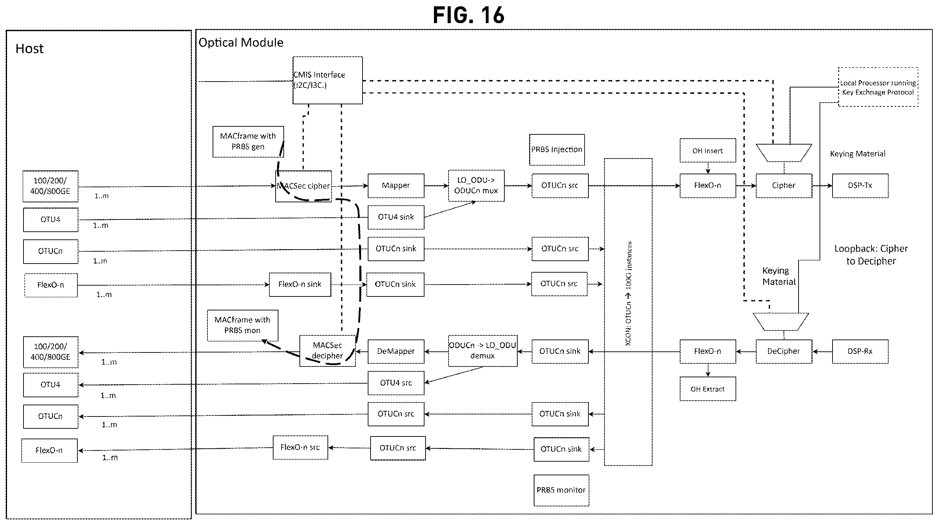

FIG. 16 is a block diagram schematically depicting an example host and an example cooperating pluggable configured to perform an AES test in the MACsec case, in accordance with one embodiment. In this example, the host configures keying material and enables encryption. Instead of the actual client signal, Ethernet frames with a PRBS payload are injected and encrypted. The loop backed stream is decrypted and monitored for PRBS pattern match. The test runs for the duration requested by the host. The pass/fail determination is based on the number of PRBS errors detected. This example may be applicable in OpenRoadm and ZR modes. The parameter m depends on the rates of the client signal, and the capacity of the module.

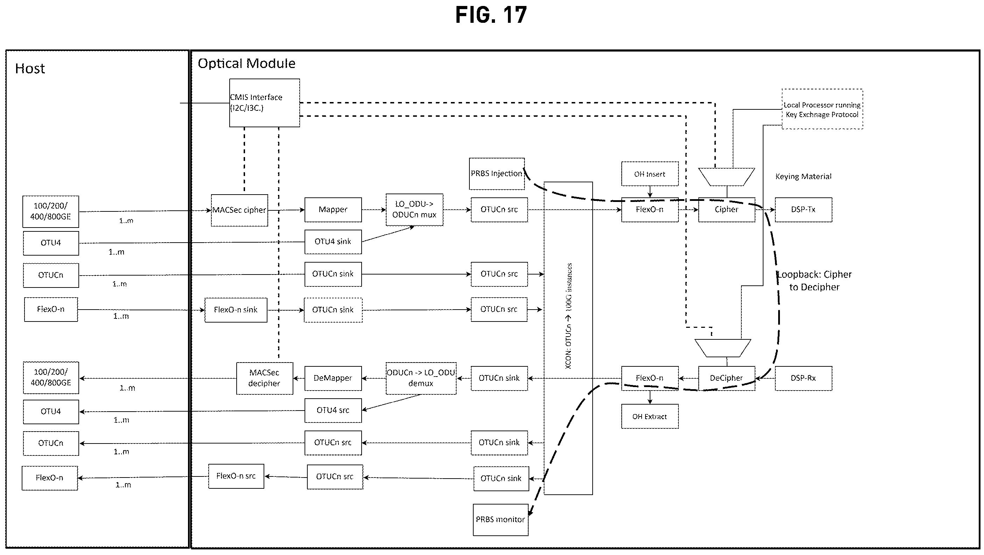

FIG. 17 a block diagram schematically depicting example host and an example cooperating pluggable, representing another AES test - FlexOsec case. In this example, which enables encryption, the host configures the keying material. A pseudo-random binary sequence (PRBS) is injected in place of the actual client signal (or ODU(s)) into all 100G FlexO instances, and encryption is applied after FlexO-n framing and overhead insertion, allowing the PRBS stream to be processed through both cipher and decipher blocks during the test. After decryption and subsequent demapping, the PRBS stream is monitored for pattern matches. A test run is conducted for the duration requested by the host. A pass/fail determination is based on the number of PRBS errors detected. Similar tests can be performed in ZR modes, including for example those shown in FIG. 15.

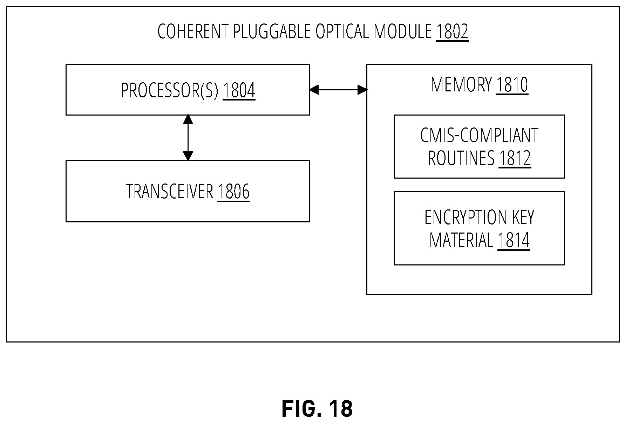

FIG. 18 shows a schematic diagram of a coherent pluggable optical module 1802, in accordance with some embodiments. In various embodiments, the coherent pluggable optical module 1802 includes one or more processors 1804 configured to perform digital signal processing, framing, encryption, and transport-layer adaptation. The term "processor" as used herein may refer to any combination of digital logic blocks, application-specific integrated circuits (ASICs), field-programmable gate arrays (FPGAs), microcontrollers, or dedicated hardware engines capable of executing signal processing functions relevant to coherent optical transmission.

In some implementations, the processor(s) 1804 include a digital signal processor (DSP) configured to perform various functions, including transmit-side functions such as forward error correction (FEC) encoding, modulation mapping, pulse shaping, and digital-to-analog conversion. The DSP may also include receive-side functions as analog-to-digital conversion, demodulation, equalization, dispersion compensation, and error correction decoding. The DSP may be implemented as a monolithic ASIC or as a distributed set of processing cores.

In certain embodiments, the processor(s) 1804 include a framing engine configured to generate or terminate optical transport network (OTN) frames, such as OTU4 or OTUCn frames defined by ITU-T G.709. The framing engine may include an overhead insertion unit that places section, path, and payload overhead bytes into the outgoing frame, and may also include a corresponding overhead extraction unit for received frames. The framing engine may support flexible OTN framing structures such as FlexO-n, which aggregate multiple 100G tributary signals into a composite transport stream.

In some embodiments, the processor(s) 1804 include a mapping engine configured to encapsulate client signals (e.g., Ethernet, Fiber Channel, or ODUk) into OTN payload containers. The mapping engine may support generic mapping procedures (GMP), bit-synchronous mapping, or asynchronous mapping depending on the client signal type. A corresponding demapping engine may be included to extract client signals from received OTN payloads. References to OTN clients herein are intended to encompass both fixed-rate OTUk signals and flexible-rate OTUCn signals, supporting a range of optical transport modes.

In further embodiments, the processor(s) 1804 includes a cryptographic engine configured to perform encryption of the transport payload prior to modulation. The cipher may implement AES-256 or other standardized encryption algorithms at line rate. A corresponding decryption engine may be included to recover encrypted payloads from received signals. These cryptographic functions may be integrated into the DSP or implemented as separate hardware blocks.

The processor(s) 1804 also include a control interface compatible with CMIS, allowing configuration of the module's operating mode (e.g., OTU4, OTUCn, Ethernet client), modulation format, FEC type, and encryption settings. The processor may further support multiplexing and demultiplexing functions for low-order and high-order ODU signals, enabling aggregation and distribution of client traffic within the module. In various embodiments, configuration of security parameters and key material may be performed via Command Data Block (CDB) commands, direct register-based management interfaces, or high-speed interfaces such as SGMII, thereby providing flexibility in how the host communicates configuration data to the module.

In various embodiments, the processors described herein may be implemented individually or in combination, and may be distributed across multiple physical components within the module. The specific configuration may vary depending on the module's intended application, supported data rates, and compliance with industry standards.

In various embodiments, the coherent optical module includes one or more memory components 1810 configured to store data, instructions, configuration parameters, and runtime state information. The memory 1810 may include volatile memory (e.g., SRAM, DRAM) and nonvolatile memory (e.g., flash, EEPROM), and may be integrated within the module's processor subsystem or provided as discrete components. The memory may store firmware for the module's control logic, including CMIS-compliant management routines, encryption key material, DSP configuration profiles, and diagnostic logs. In some embodiments, the memory may be used to buffer client data during mapping or demapping operations, or to support packet-based timing protocols such as IEEE 1588v2 or Synchronous Ethernet.

The memory 1810 may also support secure storage of cryptographic keys used by the cipher/decipher engines, including MACsec, FlexOsec, or ZRsec implementations. In configurations where the module includes a local processor running a key exchange protocol, the memory 1810 may store session keys, authentication credentials, and protocol state information. In certain embodiments, the memory 1810 may be accessible via a management interface for firmware updates, fault logging, or performance monitoring.

In further embodiments, the coherent optical module includes one or more transceivers 1806 configured to convert electrical signals into optical signals and vice versa. Each transceiver 1806 may include a transmit path comprising a digital-to-analog converter (DAC), driver amplifier, and optical modulator, and a receive path comprising for example a photodetector, transimpedance amplifier (TIA), and analog-to-digital converter (ADC).

The transceivers 1806 may be configured to support multiple line rates and modulation formats and may be controlled by the DSP to optimize performance based on link conditions. In some embodiments, the transceivers may include integrated optical components such as polarization beam splitters, wavelength lockers, or variable optical attenuators. The transceivers may be compliant with industry standards and may support interoperability with reconfigurable optical add-drop multiplexers (ROADMs) and other line system elements.

Although the exemplary embodiments of the present disclosure are described above in detail with reference to the accompanying drawing(s) of the figures, the present disclosure is not limited thereto and may be embodied in different forms and combinations apparent to those skilled in the art, based on the teachings hereof, without departing from the technical concept of the present disclosure. The exemplary embodiments of the present disclosure are provided for illustrative purposes only and are not intended to limit the technical concept of the present disclosure. Therefore, it should be understood that the above-described one or more exemplary embodiments are illustrative in all aspects and do not limit the present disclosure.

Even though particular combinations of features are disclosed in this specification, these combinations are not intended to limit the disclosure. In fact, features may be combined in ways not specifically disclosed in the specification, as will be apparent to those skilled in the art based on the teachings hereof.

No element, act, or instruction used in the present disclosure should be construed as critical or essential to the invention unless explicitly described as such. Further, the phrase "based on" is intended to mean "based, at least in part, on" unless explicitly stated otherwise.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by anyone of the following: A is true (or present) and Bis false (or not present), A is false (or not present) and B is true (or present), and both A and B are true (or present).

In addition, use of the "a" or "an" is employed to describe elements, components and/or aspects of the one or more example embodiments herein. This is done merely for convenience and to give a general sense of the inventive concept. This description should be read to include one or more and the singular also includes the plural unless it is obvious that it is meant otherwise.

Further, as used herein, any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

While the present disclosure describes various embodiments for illustrative purposes, such description is not intended to be limited to such embodiments. On the contrary, the applicant's teachings described and illustrated herein encompass various alternatives, modifications, and equivalents, without departing from the embodiments, the general scope of which is defined in the appended claims. Information as herein shown and described in detail is fully capable of attaining the above-described object of the present disclosure, the presently preferred embodiment of the present disclosure, and is, thus, representative of the subject matter which is broadly contemplated by the present disclosure.

## Claims

1. A method for configuring security in a coherent pluggable optical module, the method comprising:
exchanging command data with a host device via a management interface;
receiving, via the management interface, one or more security parameters comprising at least one of: an encryption type, an algorithm identifier, a key lifetime, and a timeout behavior;
receiving, via the management interface, keying material;
storing the security parameters and the keying material in a secure memory region within the module;
processing an activation indication from the host device; and
in response to the activation indication, enabling encryption for client signals on a transmit path and/or enabling decryption for client signals on a receive path.

2. The method of claim 1, wherein the security parameters further comprise an encryption scope parameter that indicates per-client encryption or bulk encryption.

3. The method of claim 2, wherein per-client encryption comprises applying, to each of a subset of one or more client signals of the coherent pluggable optical module, said encryption and said decryption using a designated encryption type, and designated encryption and decryption keys from said keying material.

4. The method of claim 3, wherein designated client signals not included in said subset are operated in non-encryption plain text mode.

5. The method of claim 2, wherein bulk encryption comprises applying said encryption and said decryption to all client signals of the coherent pluggable module using a common encryption key and decryption key from the keying material, and a designated encryption type selected from FlexOSec or ZRsec.

6. The method of claim 3, wherein the subset of client signals comprises Gigabit Ethernet, nGE, client signals, and the designated encryption type is selected from MACsec, FlexOsec, or ZRsec.

7. The method of claim 3, wherein the subset of client signals comprises optical transport network, OTN, client signals, and the designated encryption type is FlexOsec.

8. The method of claim 1, wherein the security parameters and the keying material are transmitted in plain text over the management interface.

9. The method of claim 1, wherein receiving the security parameters and the keying material is performed according to a key encapsulation mechanism, KEM, scheme.

10. The method of claim 1, wherein the keying material comprises at least one of Advanced Encryption Standard, AES, key.

11. A coherent pluggable optical module configured to be removably coupled to a host device, the module comprising:
a management interface;
one or more processors;
a memory comprising a secure storage region configured to store security parameters and key material;
a cryptographic engine configured to perform encryption and decryption of client data;
wherein the memory further comprises instructions that, when executed by the one or more processors, cause the processors to:
receive, from the host device, via the management interface, one or more security parameters and keying material;
store the security parameters and the keying material in the secure storage region; and
process an activation indication from the host device; and
in response to the activation indication, enabling encryption for client signals on a transmit path and/or enabling decryption for client signals on a receive path.

12. The module of claim 11, wherein the security parameters further comprise an encryption scope parameter that indicates per-client encryption or bulk encryption.

13. The module of claim 12, wherein per-client encryption comprises applying, to each of a subset of one or more client signals of the coherent pluggable optical module, said encryption and said decryption using a designated encryption type, and designated encryption and decryption keys from said keying material.

14. The module of claim 13, wherein designated client signals not included in said subset are operated in non-encryption plain text mode.

15. The module of claim 12, wherein bulk encryption comprises applying said encryption and said decryption to all client signals of the coherent pluggable module using a common encryption key and decryption key from the keying material, and a designated encryption type selected from FlexOSec or ZRsec.
